# EUROPEAN PATENT APPLICATION

(11) **EP 1 614 499 A1**
(43) Date of publication of application: **11.01.2006**
(21) Application number: 04076989.5
(22) Date of filing: 09.07.2004
(51) Int. Cl.: B23K 26/38, H01L 21/00

(54) **Laser cutting method and arrangement for performing said method**

(71) Applicant: Advanced Laser Separation International (ALSI) B.V., 6641 TL, Beuningen (NL)
(72) Inventor: Chall, Hans Peter, 6584 DH Molenhoek (NL); Mai, Tuan Ahn, 5629 PJ Eindhoven (NL)
(74) Representative: Blokland, Arie

(57) **Abstract**

The present invention relates to a laser cutting method, for forming a score in a substrate material. At least one pulsed laser beam impinges on a substrate material for melting at least a fraction of said substrate material, and said score is formed by moving the substrate material relative to the at least one pulsed laser beam. The laser beam has an intensity and a pulse duration such that at least a part of said molten fraction is vaporized for exerting a force on said molten fraction by said vaporized part, for substantially removing said molten fraction from said score. The invention further relates to an arrangement for performing the laser cutting method.

## Description

### Field of the Invention

The present invention relates to a laser cutting method for forming a score in a substrate material, such as a semiconductor material, wherein at least one pulsed laser beam impinges on said substrate material for melting at least a fraction of said substrate material, and wherein said score is formed by moving said substrate material relative to said at least one pulsed laser beam.

The invention further relates to an arrangement for performing such a laser cutting method, comprising means for receiving a substrate material, such as a semiconductor material, at least one laser radiation source for providing at least one pulsed laser beam, means for directing said at least one pulsed laser beam for impinging said pulsed laser beam on said substrate material for melting at least a fraction of said substrate material, and means for moving said substrate material relative to said at least one pulsed laser beam for forming a score on said substrate material.

### Background of the Invention

In the field of wafer dicing (separating semiconductor elements from wafers made of semiconductor material) it is very important to be able to provide a clean and accurate cut, having a score width which is as narrow as possible. In the light of the dimensions of typical semiconductor elements on a wafer, it will be understood that being able to provide narrow and clean scores, enables the manufacturer of the wafers to create more semiconductor elements on a single wafer. Another requirement is that the cutting method itself does not provide damaging side effects for the semiconductor elements formed on the wafer. Wafer dicing is usually performed using laser cutting methods.

Amongst laser cutting methods used in wafer dicing industry, two conventional laser cutting methods can be distinguished: evaporation cutting and melt ejection cutting. Both techniques involve impinging a pulsed laser beam onto a wafer surface for forming a score, however, the requirements for the type of laser to be used and other parameters in both methods are different, and the techniques themselves are based on a different principle.

In evaporation cutting, a pulsed laser beam having a very high intensity (power densities over 10⁸ W/cm²) is used and the pulse duration of the pulsed laser beam is very short (< 150 ns, preferably < 30 ns). As a result of the high intensity of the beam, the temperature of the material quickly reaches its vapour temperature and vaporised semiconductor material is ejected from the score as a results of its recoil pressure. Each pulse of the pulsed laser leaves a hole in the semiconductor material and together the holes in the semiconductor material form the required score.

A disadvantage of evaporation cutting is that the removal depth of the material is relatively small (normally less than 10 µm). If evaporation cutting is used in order to cut a substrate having a thickness of 150 µm, it will be understood that there is a significant number of scans (at least 15) necessary in order to cut through the wafer. Another disadvantage of the evaporation cutting method is the formation of vapour plasma, which forms a barrier between the incident laser beam and the work piece and which in addition gives rise to the problem of plasma impact on the substrate surface. Altogether, the main drawback of the evaporation cutting method is the very limited effective dicing speed (removal rate) as a result of the above-mentioned disadvantages.

The other technique distinguished in this field, the melt ejection cutting method, is performed in a single pass of the laser beam over the substrate. Here, a lower intensity laser beam is used (< 10⁶ Watt/cm²) but with a much longer pulse duration (between 5 µs and 50 ms). Instead of being vaporised, the laser beam used, together with the long pulses, causes the semiconductor material to melt and the molten material is blown out of the score using a high pressure jet of gas (nozzle diameter < 1 mm, gas pressure up to 20 bar). A disadvantage of this technique is that it can only be performed if the bottom of the material to be cut is unblocked by the cutting itself, i.e. the cutting must be performed deep enough to cut completely through the substrate, so that a gas jet with high shearing force can be blown through the score in order to eject the molten material underneath the substrate. This limits the technique to a maximum cutting depth (which is dependent on the case).

Another disadvantage of the conventional melt ejection cutting technique is that delamination, large thermal effects and induced thermal stress in the wafer will significantly deteriorate the cutting results. This method of cutting is therefor of a lesser quality than the evaporation cutting technique described above.

### Summary of the Invention

It is an object of the present invention to provide a laser cutting method for cutting substrate materials, such as semiconductor materials, which is quick and efficient and leaves a clean and narrow cut in the substrate material to be treated.

These and other objects are achieved by the invention in that there is provided a laser cutting method, for forming a score in a substrate material, wherein at least one pulsed laser beam impinges on said substrate material for melting at least a fraction of said substrate material, and wherein said score is formed by moving said substrate material relative to said at least one pulsed laser beam, wherein said beam has an intensity and a pulse duration such that at least a part of said molten fraction is vaporized for exerting a force on said molten fraction by said vaporized part for substantially removing said molten fraction from said score.

In the laser cutting method of the present invention the intensity of the laser beam and the duration of the pulses is chosen such that a fraction of the semiconductor material of the substrate to be treated will melt, and that at least a part of this fraction will vaporize. The recoil pressure of this vaporized part is used to directly eject the molten material from the score.

Since only a part of the semiconductor material is vaporized, the amount of latent heat of evaporation to overcome is much smaller than compared to the technique of evaporative material cutting. Less than 25% of energy (less than 15% for silicon) is required to remove a similar volume of material by the method of the present invention than compared to removing the same volume using evaporative material removal. As an example, only 200 J/cm³ energy is required for silicon to melt, than compared to 1000 J/cm³ in order to vaporize silicon. The method of the present invention is therefor an effective way of removing material. In addition, it will be understood that using less energy or laser power during the cutting operation also reduces the damage to the surrounding material near the score.

Since the molten material is ejected from the score by the recoil pressure of the vaporized part present in the score, it is not necessary, as compared to conventional melt ejection techniques, to cut all the way through the substrate in order to be able to remove the molten material. The molten material can effectively be fully removed from the score after each laser pulse. The amount of heat energy deposited on the substrate each scan, is less than compared to conventional melt ejection cutting. As a result the laser cutting method of the present invention minimizes residual stress and the occurrence of thermal cracks.

Since it is for a large based on melting the material, the laser cutting method of the present invention, is more effective in removing the material each pass than the evaporative material removal technique. Therefor, less passes of a laser beam are required in order to cut through a wafer of semiconductor material than compared to the evaporative material removal technique. However, since the number of passes of the laser beam is still relatively small, the total amount of energy deposited on the substrate, and the heat energy in the wafer resulting from this, is much smaller than compared to the melt ejection cutting technique and the evaporative material cutting technique of prior art. It will therefor be understood that the temperature gradient distribution is less steep than compared to conventional methods. This results in a clear narrow cut, and in less damage to the semiconductor elements as compared to the separation methods of the prior art.

According to an embodiment of the present invention the beam intensity and the pulse duration are such that said force exerted by said vaporized part on said molten fraction is equal to or larger than surface tension forces exerted by said semiconductor material on said molten fraction.

It will be understood that the molten fraction is most efficiently removed if the above-mentioned surface tension forces are exceeded by the force on the molten fraction by the vaporized part.

In another embodiment of the present invention the beam intensity and pulse duration are such that the force exerted by the vaporized part on the molten fraction is optimized for only just removing said molten fraction from the score.

In the method according to this embodiment, there is established an optimum between on one side effectively removing the molten fraction from the score, and on the other side the amount of energy used for vaporizing the semiconductor material. It is important to keep the vaporized part of the molten fraction as small as possible, since, as explained above, the amount of energy required to vaporize material is much larger than the amount of energy required to melt the same material. In other words by keeping the vaporized part of the molten fraction as small as possible, a relatively large part of the laser energy is used for melting the semiconductor material, and therefor the depths of the score formed each pass is larger. It will be understood that the vaporized part should be at least large enough to build up sufficient pressure to blow out the molten material from the score. It has been observed that in a number of cases an optimum can already be found if the vaporized part is only a few percent of the molten fraction.

According to an embodiment of the present invention the beam intensity is smaller than 10⁹ Watt/cm². And according to yet another embodiment of the present invention the pulse duration is comprised in a range between 100 ns and 1500 ns.

It has been observed for the above-mentioned parameter ranges, the laser cutting method of the present invention can be performed efficiently.

In another embodiment of the present invention said score is formed by forming a plurality of holes in said semiconductor material using said at least one pulsed laser beam.

The pulses of said laser beam can be used to form the holes in the semiconductor material. If the holes are closely separated, a score can be formed with a depth equal to the depths of the holes.

According to another embodiment of the present invention a plurality of pulsed laser beams is impinged simultaneously on said semiconductor material.

It will be understood that instead of using multiple passes, the semiconductor elements can be separated from the wafer if a plurality of pulsed laser beams is moved relative to the substrate for forming the score. This plurality of laser beams may be generated using a number of laser radiation sources, or alternatively, according to another embodiment of the present invention, said plurality of pulsed laser beams is provided by a single pulsed laser source (e.g. using beam splitters, gratings, half mirrors or the like). This latter embodiment provides benefits in that the pulse duration of the pulsed laser beams will be equal for all beams.

In another embodiment, each hole of said plurality of holes is formed by a pulse of said plurality of pulsed laser beams impinging on said semiconductor material and said moving of said substrate relative to said plurality of laser beams is controlled such that each of said pulses of further laser beams of said plurality of laser beams following a leading laser beam of said plurality of laser beams impinges on said semiconductor material in a hole formed by said leading laser beam.

Essentially the movement of the substrate relative to the plurality of laser beams can be adapted to, for example, the distance between each two laser beams of the plurality of laser beams and the interval between the holes, such that each of the holes formed by the leading laser beam is effectively hit by each pulse (or at least part of the pulses) of the further, subsequent laser beams following the leading laser beam. It will be understood that by hitting the same hole more than once with a number of subsequent pulses will deepen the score effectively. The dicing speed of the laser cutting method of the present invention is thereby directly improved.

According to another embodiment of the present invention said score is formed by moving said substrate relative to at least one pulsed laser beam in a plurality of passes. It will be understood that the benefits of using a plurality of pulsed laser beams can also be achieved, for a large part, by the above described embodiment. Particular deep scores can be achieved by moving a plurality of pulsed laser beams over the same score in a plurality of passes.

According to another embodiment, each hole of said plurality of holes is formed by a pulse of said at least one pulsed laser beam impinging on said semiconductor material in said plurality of passes, and said moving of said substrate relative to said at least one laser beam is controlled such that each of said pulses of each of said plurality of passes following a first pass of said plurality of passes, impinges on said semiconductor material in a hole formed by said at least one pulsed laser beam during said first pass.

Again, particularly deep scores can be formed by synchronizing the movement of the laser beam relative to the substrate such that the pulses of the laser beam in each subsequent pass will hit the holes formed in earlier passes.

In another embodiment of the present invention, the holes are formed such that they are at least partly overlapping each other. It will be understood that by performing the method of the present invention according to this embodiment, clean scores can effectively be formed.

In accordance with a second aspect of the present invention, there is provided an arrangement for performing a laser cutting method according to any of the previous claims, comprising means for receiving a substrate material, such as a semiconductor material, at least one laser radiation source for providing at least one pulsed laser beam, means for directing said at least one pulsed laser beam for impinging said laser beam on said substrate material for melting at least a fraction of said substrate material, and means for moving said substrate material relative to said at least one pulsed laser beam for forming a score on said substrate material, wherein laser radiation source is arranged for providing said beam having an intensity and a pulse duration such that at least a part of said molten fraction is vaporized for exerting a force on said molten fraction by said vaporized part for substantially removing said molten fraction from said score.

It will be understood that an arrangement as described above is particularly useful for performing the method according to the first aspect of the present invention. In said arrangement, according to an embodiment thereof, said laser radiation source is arranged for controlling said beam intensity in a range below 10⁹ Watt/cm².

According to another embodiment of the invention, said laser radiation source is arranged for controlling said pulse duration between 100 ns and 1500 ns.

In accordance with yet another embodiment of the present invention, said at least one pulsed laser beam and said means for moving said substrate are arranged for forming said score by forming a plurality of holes in said semiconductor using said at least one pulsed laser beam. It will be understood that the interval between each of the pulses of the pulsed laser beam and the moving speed of the substrate relative to the laser beam will determine the distance between the holes formed on a substrate.

According to another embodiment of the present invention said laser radiation source is arranged for providing a plurality of pulsed laser beams. This may be achieved by providing a plurality of laser beams, for example and in accordance with yet another embodiment of the present invention, by splitting a single laser beam coming from a laser radiation source into a plurality of pulsed laser beams, by using splitting means.

According to another embodiment of the present invention said means for moving said substrate are arranged for controlling said movement of said substrate, such that each of said pulses of further laser beams of said plurality of pulsed laser beams following a leading laser beam of said plurality of pulsed laser beams impinges on said semiconductor material in a hole formed by said leading laser beam.

In accordance with the above-mentioned embodiment, said means for moving said substrate are arranged for synchronizing the movement of said substrate relative to the plurality of laser beams to, e.g. the distance between the laser beams and/or the duration and interval between the pulses.

In accordance with yet another embodiment of the present invention said means for moving said substrate are arranged for moving said substrate relative to said at least one pulsed laser beam in a plurality of passes.

According to another embodiment of the invention, said means for moving said substrate are arranged for controlling said movement of said substrate such that each of said pulses of each of said plurality of passes following a first pass of said plurality of passes impinges on said semiconductor material in a hole formed by said at least one pulsed laser beam during said first pass.

In this, even more sophisticated, embodiment of the arrangement, the means for moving the substrate relative to the at least one laser beam are arranged for synchronizing the beginning of each pass of the movement and the velocity of the movement with the frequency and duration of the pulses, and in case the embodiment is used in combination with a plurality of laser beams, the distance between each of the laser beams, such that each of the holes formed in the first pass is hit by pulses of the at least one laser beam in the subsequent passes.

According to yet another embodiment of the present invention said means for moving said substrate are arranged for controlling said movement of said substrate such that said holes are at least partly overlapping each other.

It will be understood that the laser cutting method and arrangement of the present invention can also be used for cutting different materials, such as sheet metals or other materials. The laser cutting method is mainly based on removing a molten fraction from a score formed, using a vaporized fraction. This principle may also be used for cutting different materials.

The above-mentioned and other features and advantages of the invention are illustrated in the following description of the present invention, with reference to the enclosed drawings. It will be understood that the invention is not limited to the embodiments disclosed, which are only provided for explanatory purposes, however the scope of the invention is provided by the scope of the appended claims.

### Brief description of the Drawings

Figures 1A-C illustrates the concept of the laser cutting method according to the present invention, wherein a score is formed in a substrate of semiconductor material using a pulsed laser beam.
Figure 2 illustrates another embodiment of the laser cutting method of the present invention.
Figure 3 shows an arrangement according to the present invention for performing the laser cutting method as described above.

### Detailed description of the Drawings

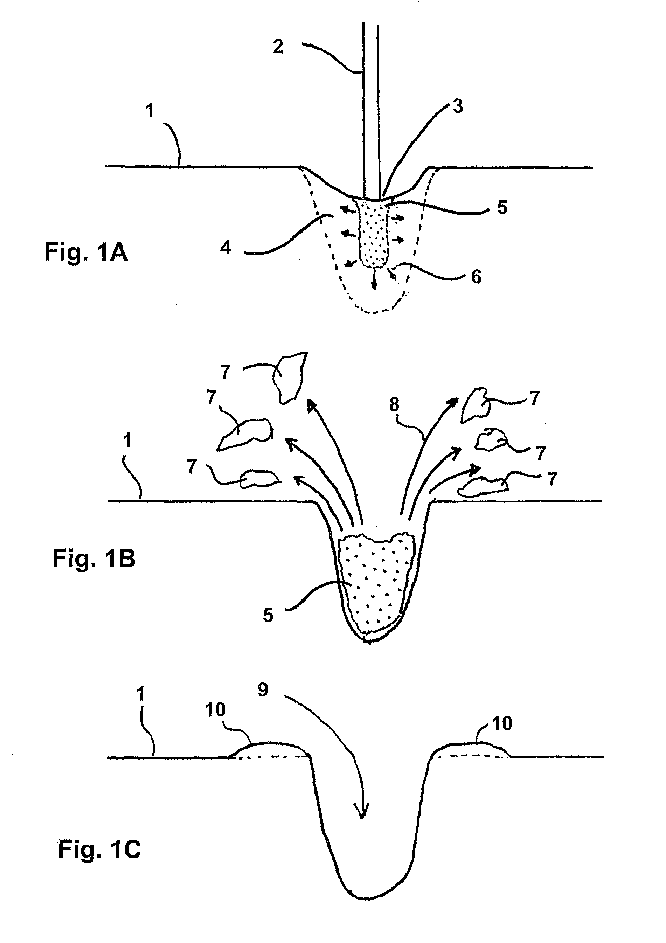

In figure 1A, a pulsed laser beam 2 impinges on the surface of a substrate 1 of semiconductor material. Due to the impact of the laser beam 2 on the surface of the substrate 1 at the impact location 3, the semiconductor material in a region 4 around the impact location 3 (indicated by the dotted line around region 4) will melt as a result of the absorbed energy. Directly underneath the impact location 3, in the region indicated with reference number 5, the amount of absorbed energy is sufficient to vaporize the semiconductor material. As a result of vaporizing the semiconductor material, the pressure in vaporized part 5 quickly builds up, such that a force 6 is exerted on the molten fraction 4 around the vaporized part 5.

In figure 1B it is shown that, directly after impact of the pulse of the laser beam 2 of figure 1A, the vaporized part 5 of the molten fraction of figure 1A, expands to all sides and blows (8) the remaining bits 7 of the molten fraction of figure 1A out of the hole formed in the substrate. Note that the molten fraction 4 of figure 1A is blown from the bottom of the hole to the atmosphere above, by the vaporized fraction 5.

Figure 1C illustrates the situation after impact of the laser beam 2 of figure 1A and after the remaining bits 7 of figure 1B have been blown out of the hole. Figure 1C shows the hole 9 formed by the impact of the pulse of the laser beam 2 of figure 1A in the substrate 1. Some remains 10 of the molten material 4 of figure 1A may be present on the sides of the hole 9 which is formed. Alternatively, the remaining bits 7 of figure 1B of the molten fraction 4 of figure 1A may have been removed using a high pressure gas stream across the surface, or by a different means of removing the molten material. In this later case, it will be understood that the sides of hole may be completely clean from semiconductor material, and the small crater hills 10 may not be present.

The intensity of laser beam used and the duration of the pulses of the pulsed laser beam are extremely critical. The laser cutting method of the present invention must be performed such that the vaporized part of the molten fraction is large enough, so that the amount of recoil pressure is sufficient to blow out the molten fraction. On the other side, the vaporized fraction should not be too large since in that case too much energy would be absorbed in order to overcome the latent heat of evaporation, and as a result the score or the hole formed using the laser cutting method will not be deep enough (note that if a large part of the energy is absorbed in order to overcome the latent heat only a small part of the semiconductor material can be vaporized, while the molten fraction will in that case be small as well). It has been observed that (dependent on the case) about 30% of the molten fraction should optimally be vaporized. The pressure and the pressure gradient generated within the hole by vaporization should be just only high enough in order to overcome surface tension forces and in order to expel molten material from the hole, lining the inner surface of the hole. If the intensity is too high, the thickness of the molten layer will reduce and the vaporized part of the molten fraction will increase, leaving only a shallow cut.

The long pulsed duration in combination with the laser beam intensity creates a relatively large molten fraction, and in combination with a sufficiently large part of vaporized semiconductor material, the laser cutting method of the present invention will be very effective. The amount of energy necessary for performing the laser cutting method is much smaller than for the conventional laser cutting techniques, such as evaporative material cutting and the conventional melt ejection techniques. The table below provides an overview of the laser parameters used for performing the laser cutting method of the present invention as compared to conventional evaporative cutting and melt ejection cutting.

| Cutting mode | λ [nm] | Pulse duration | Frequency [kHz] | Intensity [W/cm²] |
|---|---|---|---|---|
| Cooperative material cutting | 193-1064 | ≤ 50 ns | 5-50 | > 10⁸ |
| Conventional melt ejection | 532-1064 or 10.6 µm | 5 µs 50ms | 1-30 | < 10⁸ |
| Invention | 355-1064 | 100-1500 ns | 5-30 | < 10⁹ |

The laser cutting method of the present invention can be performed using Q-switched solid states lasers, such as Q-switched YAG-lasers, and disc-lasers or fibre-lasers.

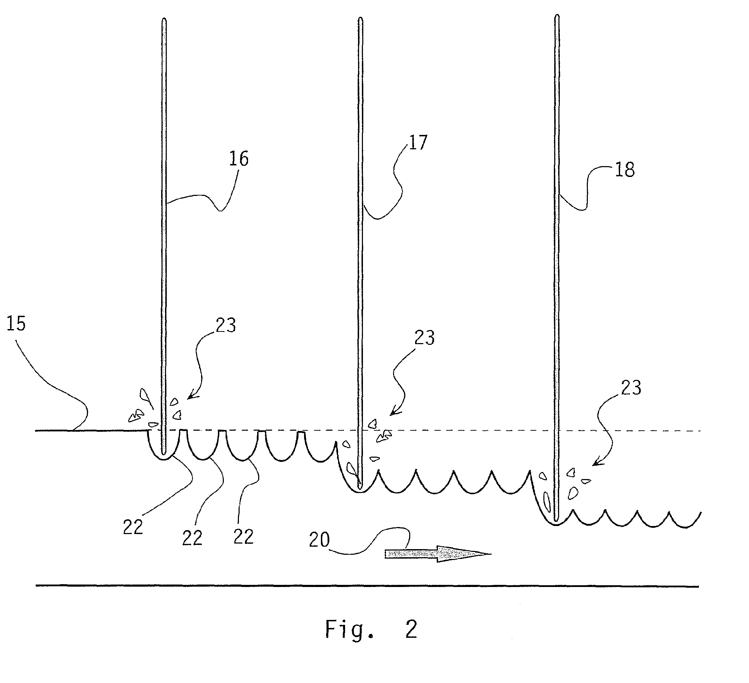

Figure 2 illustrates the laser cutting method of the present invention according to embodiment thereof, wherein a plurality of laser beams 16, 17 and 18, are subsequently moved across the surface of a substrate 15 of semiconductor material. Each time a pulse of the laser beam 16 impacts the surface of the substrate 15 the first pulsed laser beam 16 creates holes 22 in the substrate 15. As described in relation to figures 1A-1C, the molten fraction created by the impact is blown out of each hole as is generally indicated by reference number 23 with an arrow. The substrate 15 is moved in the direction 20 relative to the laser beams 16, 17 and 18 and the speed of movement of the substrate can be synchronised with het distance between the laser beams 16, 17 and 18 and the time intervals between the pulses, such that the pulses of laser beam 17 travelling the same trajectory after laser beam 16, will impact each of the holes created by the pulses of laser beam 16. This will cause each of the holes 22 to become deeper and broader. As a result of the deepening of the holes, the holes that are formed on the substrate surface will grow together forming a score.

The pulses of the pulsed laser beam 18 will again travel the same path subsequently after laser beam 16 and 17, and its pulses may impact the substrate again in each of the holes 22 such that the score is again deepened. It is clear from figure 2, by subsequently travelling the same path with a plurality of laser beams, a score is formed which becomes deeper every time any of the laser beams of the plurality of laser beams passes the holes formed by the earlier laser beams. Therefor, if the number of laser beams is sufficiently large, the substrate may be cut in a single pass.

It will be understood that instead of using a plurality of laser beams, it is possible to perform the laser cutting method of the present invention using a single laser beam travelling over the surface of the substrate in a plurality of passes. Again, the movement of the substrate relative to the laser beam can be synchronized with the time interval between the pulses such that each pulse of the laser beam will impact the holes that are formed in a first or earlier pass of the laser beam, such that a score can efficiently be formed.

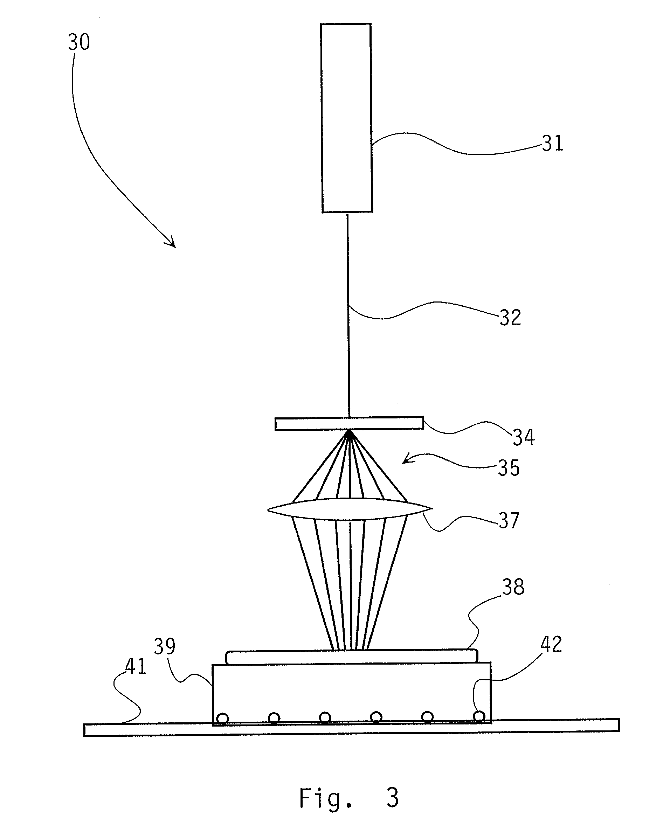

In figure 3 there is shown an arrangement 30 according to the present invention, which is suitable for performing the laser cutting method of the present invention described hereinbefore. The arrangement 30 comprises a laser radiation source 31, which is arranged for generating a laser beam 32. The laser radiation source (or the arrangement) may comprise means for providing a plurality of pulsed laser beams, or for splitting the single laser beam 32 into a plurality of laser beams 35, such as diffraction grating 34. It will be understood that, within the scope of the invention, the means 34 for splitting the single laser beam 32 may be part of the laser radiation source 31, or may be implemented in the arrangement separately. For directing the plurality of laser beams 35 onto the substrate 38, the arrangement according to the present invention comprises a focussing objective 37. It will be understood that, dependent on the location of the radiation source, and the form and dimensions of the arrangement, the arrangement may further include mirrors, half mirrors, beam splitters, glass fibre and other means for directing the laser beam. The substrate 38 is carried by a substrate carrier 39 which can be moved relative to the laser beam. In the present example, these means for moving the substrate relative to the plurality of laser beams, is formed by a number of wheels 42 mounted on the side of the substrate carrier, which can be moved across a rail 41 using a servo (not shown).

For the purpose of comprehensiveness, it is noted here that numbers modification and variations of the present invention are possible in the light of the above teachings. It is therefor understood that, within the scope of the appended claims the invention may be practised otherwise than specifically described herein.

## Claims

1. Laser cutting method, for forming a score in a substrate material, such as a semiconductor material, wherein at least one pulsed laser beam impinges on said substrate material for melting at least a fraction of said substrate material, and wherein said score is formed by moving said substrate material relative to said at least one pulsed laser beam, wherein said beam has an intensity and a pulse duration such that at least a part of said molten fraction is vaporized for exerting a force on said molten fraction by said vaporized part for substantially removing said molten fraction from said score.

2. Laser cutting method according to claim 1, wherein said beam intensity and said pulse duration are such that said force exerted by said vaporized part on said molten fraction is equal to or larger than surface tension forces exerted by said substrate material on said molten fraction.

3. Laser cutting method according to claim 2, wherein said beam intensity and said pulse duration are such that said force exerted by said vaporized part on said molten fraction is optimized for only just removing said molten fraction from said score.

4. Laser cutting method according to any of the previous claims, wherein said beam intensity is smaller than 10⁹ Watt/cm².

5. Laser cutting method according to any of the previous claims, wherein said pulse duration is comprised in a range between 100 ns and 1500 ns.

6. Laser cutting method according to any of the previous claims, wherein said score is formed by forming a plurality of holes in said substrate material using said at least one pulsed laser beam.

7. Laser cutting method according to any of the previous claims, wherein a plurality of pulsed laser beams is simultaneously impinged on said substrate material.

8. Laser cutting method according to claim 7, wherein said plurality of laser pulsed beams is provided by a single pulsed laser source.

9. Laser cutting method according to any of the claims 7 or 8, as dependent on claim 6, wherein each hole of said plurality of holes is formed by a pulse of said plurality of pulsed laser beams impinging on said substrate material, and wherein said moving of said substrate material relative to said plurality of laser beams is controlled such that each of said pulses of further laser beams of said plurality of pulsed laser beams following a leading laser beam of said plurality of pulsed laser beams impinges on said substrate material in a hole formed by said leading laser beam.

10. Laser cutting method according to any of the previous claims, wherein said score is formed by moving said substrate material relative to said at least one pulsed laser beam in a plurality of passes.

11. Laser cutting method according to claim 10, as dependent on claim 6, wherein each hole of said plurality of holes is formed by a pulse of said at least one pulsed laser beam impinging on said substrate material in said plurality of passes, and wherein said moving of said substrate material relative to said at least one laser beam is controlled such that each of said pulses of each said plurality of passes following first pass of said plurality of passes impinges on said substrate material in a hole formed by said at least one pulsed laser beam during said first pass.

12. Laser cutting method according to any of the claims 6, 9 or 11, wherein said holes are formed such that said holes are at least partly overlapping each other.

13. Arrangement according to any of the previous claims, wherein said substrate material comprises a semiconductor material, such as a substrate of semiconductor material.

14. Arrangement for performing a laser cutting method according to any of the previous claims, comprising means for receiving a substrate material, such as a semiconductor material, at least one laser radiation source for providing at least one pulsed laser beam, means for directing said at least one pulsed laser beam for impinging said laser beam on said substrate material for melting at least a fraction of said substrate material, and means for moving said substrate material relative to said at least one pulsed laser beam for forming a score on said substrate material, wherein laser radiation source is arranged for providing said beam having an intensity and a pulse duration such that at least a part of said molten fraction is vaporized for exerting a force on said molten fraction by said vaporized part for substantially removing said molten fraction from said score.

15. Arrangement according to claim 14, wherein said laser radiation source is arranged for controlling said beam intensity in a range below 10⁹ Watt/cm².

16. Arrangement according to any of the claims 14 or 15, wherein said laser radiation source is arranged for controlling said pulse duration between 100 ns and 1500 ns.

17. Arrangement according to any of the claims 14-16, wherein said at least one pulsed laser beam and said means for moving said substrate material are arranged for forming said score by forming a plurality of holes in said substrate material using said at least one pulsed laser beam.

18. Arrangement according to any of the claims 14-17, wherein said laser radiation source is arranged for providing a plurality of pulsed laser beams.

19. Arrangement according to claim 18, wherein said laser radiation source comprises means for splitting a single laser beam into said plurality of laser pulsed beams.

20. Arrangement according to any of the claims 18 or 19, as dependent on claim 17, wherein said means for moving said substrate material are arranged for controlling said movement of said substrate material such that each of said pulses of further laser beams of said plurality of pulsed laser beams following a leading laser beam of said plurality of pulsed laser beams impinges on said substrate material in a hole formed by said leading laser beam.

21. Arrangement according to any of the claims 14-20, wherein said means for moving said substrate material are arranged for moving said substrate material relative to said at least one pulsed laser beam in a plurality of passes.

22. Arrangement according to claim 21, as dependent on claim 17, wherein said means for moving said substrate material are arranged for controlling said movement of said substrate material such that each of said pulses of each said plurality of passes following first pass of said plurality of passes impinges on said substrate material in a hole formed by said at least one pulsed laser beam during said first pass.

23. Arrangement according to claim 22, wherein said means for moving said substrate material are arranged for controlling said movement of said substrate material such that said holes are at least partly overlapping each other.

24. Arrangement according to any of the claims 14-23, wherein said substrate material comprises a semiconductor material, such as a substrate of semiconductor material.
